# EUROPEAN PATENT SPECIFICATION

(11) **EP 2 838 378 B1**
(45) Date of publication and mention of the grant of the patent: **01.02.2017**
(21) Application number: 13719056.7
(22) Date of filing: 19.04.2013
(51) Int. Cl.: A23L 27/00

(54) **METHOD AND COMPOSITION**
VERFAHREN UND ZUSAMMENSETZUNG
PROCÉDÉ ET COMPOSITION

(30) Priority: 19.04.2012 GB 201206859
(43) Date of publication of application: 25.02.2015
(73) Proprietor: Givaudan SA, 1214 Vernier (CH)
(72) Inventor: WITTEVEEN, Frans, 3833 Leusden (NL)
(74) Representative: Givaudan Patents
(86) International application number: PCT/EP2013/058157
(87) International publication number: WO 2013/156591

(56) References cited:
- EP-A1- 0 070 719
- WO-A1-2013/071011
- WO-A2-02/089764

## Description

This disclosure relates to a method of replacing gelatin and to products produced thereby.

Gelatin has long been a staple in the flavour encapsulation, mainly because it is both cheap and edible. However, the worry about its sources, especially in the wake of the various outbreaks of BCE ("mad cow disease"), and the rising proportions of vegetarians, who want no exposure to animal products, has led to the desire for a replacement of gelatine by more suitable alternatives.

WO 02/089764 describes the use of unhydrolysed pea protein material as a substitute for a gelatin-based encapsulating material for food applications.

It has now been found that it is possible to make a gelatin-free encapsulated flavour by a simple method that utilises only materials of vegetable origin. There is therefore provided a method of making an encapsulated flavour, comprising the steps of
(i) emulsifying the flavour;
(ii) spraying the emulsified flavour on to a dry blend of hydrocolloid and unhydrolysed pea protein under conditions of high shear; and
(iii) continuing the shearing until the resulting particles have reached the desired size.

There is also provided a gelatin-free encapsulated flavour, comprising flavour, hydrocolloid and unhydrolysed pea protein. There is further provided a gelatin-free encapsulated flavour, preparable by a process as hereinabove described.

The flavour to be encapsulated may be any desired flavour from the very large number of such materials known to and used by the art. The process works for both lipophilic and hydrophilic flavours. Non-limiting examples include peppermint, menthol and spearmint (lipophilic) and lemon, berry and fruit flavours (hydrophilic).

As a first step, the flavour is emulsified in water. This is achieved by any convenient art-recognised means and equipment. An emulsifier will be required, and typical non-limiting examples of suitable emulsifiers known to the art include dextrinized waxy maize starch octenyl succinate (available under the trade name Capsul) and gum arabic. Optional components of the emulsion may include filling materials,such as maltodextrin, and sugar, especially in the case of material destined for use in sugar-containing applications such as chewing gums.

The resulting emulsion is sprayed on to a dry blend of hydrocolloid and unhydrolysed pea protein. Unhydrolysed pea protein, a mixture of amino acid chains and free amino acids, is commercially available as a powder, for example, from the French company Roquette, and any such material will work in this process. It is first combined with a hydrocolloid to give a dry blend. By "hydrocolloid" is meant an at least partially water-soluble natural or synthetic polymer that swells in contact with water. In relation to this process, such a material must naturally be food-grade or acceptable in food applications. A particular example is xanthan gum. Other non-limiting examples include carageenan, pectin, gum tragacanth and alginates. The blend may be made in any suitable equipment.

The dry blend is sprayed with the emulsion under conditions of high shear. Typical examples of equipment that can provide the necessary shear include vertical granulators and rotor granulators, particularly rotor granulators. In the case of the rotor granulator, the initial dry blend may be made in the machine and the emulsion then sprayed on to this blend under shear. Shearing and spraying are continued until the particles reach a desired size, at which point shearing and spraying are stopped and the particles removed and sieved.

The rotor granulator is operated according to the normal practices and within the recognised parameters of the art. Typical operating conditions are as follows:
Inlet temperature 60 - 110°C, particularly about 95°C
Product Temperature 35 - 90°C, particularly about 65°C
Air flow rate 20 - 80 M³/h, particularly about 30 M³/h
Nozzle air pressure 0.5 - 6 bar, particularly about 1 bar
Rotating disc opening 0.1 - 5 mm, particularly about 0.8 mm
Rotating disc speed 100 - 1000 rpm, particularly about 375 rpm

The use of the word "about" here merely indicates that absolute precision in these values is not required. Moreover, it may sometimes be possible and even appropriate to work outside the given ranges. The skilled person will be able to determine when this is appropriate in each case.

In a further embodiment, a further coating may be sprayed on to the particles. This can confer useful controlled release properties, particularly for chewing gum. The further coating is typically an aqueous solution of methyl cellulose, but other well-known coating materials, such as (but not limited to) modified starches, gum arabic and ethyl cellulose may also be used.

The resulting product is an encapsulated flavour that performs as well as the known gelatin-based encapsulates, but which is not gelatin-based. There is therefore provided a gelatin-free encapsulated flavour comprising flavour, hydrocolloid and pea protein. There is additionally provided a gelatin-free encapsulated flavour preparable by a method as hereinabove described.

The encapsulated flavour may be used in any application in which such encapsulates are normally used, for example, all types of consumable products. By "consumable product" is meant a product that is taken into the mouth either for ingestion (such as foodstuffs, beverages and confectionery) or for brief retention therein and then expulsion (such as toothpastes and toothgels, and mouthwashes and rinses). One particular use is chewing gums. There is therefore provided a consumable product, comprising a consumable product base and an encapsulated flavour as hereinabove described. There is also provided a method of flavouring a consumable product, comprising the provision of a consumable product base and the addition thereto of an encapsulated flavour as hereinabove defined.

By "consumable product base" is meant the totality of all the ingredients of the consumable product, with the exception of the encapsulated flavour. Such ingredients will vary, depending on the nature of the product, but both their identities and their normally-used proportions are well known to the art.

The process is further exemplified with reference to the following non-limiting examples.

### Example 1

The ingredients are shown in Table 1:

| **Material** | **Gram** |
|---|---|
| **A** | |
| Maltodextrin | 75 |
| Sugar | 75 |
| Emulsifier* | 150 |
| Water | 300 |
| Peppermint flavour | 100 |

| **B** | |
|---|---|
| Pea proteins | 240 |
| Xanthan | 60 |

| **C** | |
|---|---|
| Methyl Cellulose | 29 |
| Water | 696 |

| | |
|---|---|
| * Capsul™ | |

The materials A are blended using a high-speed stirrer to form an emulsion.

Pea protein (F85M ex Roquette) and xanthan gum (materials B) are added to an RG03 rotor granulator ex Glatt operated according to the following process parameters:
Inlet temperature 95°C
Product temperature 65°C
Air flow rate 30 M³/h
Nozzle air pressure 1 bar
Rotating disc opening 0.8mm
Rotating disc speed 375rpm

As the pea protein and xanthan are agitated in the granulator, the emulsion is sprayed on to the agitated mixture, spraying continuing until all the emulsion is sprayed (the quantity of emulsion is such that complete coating will be achieved).

The materials C are mixed to give a solution, and this solution is then sprayed on to the particles in the rotor granulator. Spraying is continued until a particle size of 500 micron is attained.

The result is fine (between 1400 micron and 125 micron (D50 ∼ 500 micron)) particles of encapsulated flavour. The methyl cellulose coating renders them especially suitable for use in chewing gum.

### Example 2

Example 1 is repeated, with the substitution of the following materials and proportions for those of Example 1

| **Materials** | **Gram** |
|---|---|
| **A** | |
| Isomalt* | 75 |
| Gum Arabic | 225 |
| Water | 300 |
| Peppermint flavour | 100 |

| **B** | |
|---|---|
| Pea proteins | 240 |
| Xanthan | 60 |

| **C** | |
|---|---|
| Methyl Cellulose | 29 |
| Water | 696 |

| | |
|---|---|
| * A sugar polyol that can give some flavour protection (against oxidation) and can act as a plasticizer. | |

The result is fine (between 1400 micron and 125 micron (D50 ∼ 500 micron)) particles of encapsulated flavour. The methyl cellulose coating renders them especially suitable for use in chewing gum.

### Example 3

### Testing in chewing gum

Chewing gum samples are prepared according to the following formula:

| | Original |
|---|---|
| Chewing Gum | (500) |

| **Mix 1** | |
|---|---|
| Solsona™ T* | 150 |
| Sorbitol ** | 100 |
| Lycasin | 48 |

| **Mix 2** | |
|---|---|
| Sorbitol ** | 175 |
| Glycerine | 20 |
| Aspartame™ | 0.2 |
| Acesulfame™ | 0.2 |
| triacetin | 2.5 |
| MCT*** | 3 |
| lecithin | 0.5 |

| **Mix 3** | |
|---|---|
| encapsulated product | 10 |

| | |
|---|---|
| * commercially-available gum base ** Neosorb™ P60W *** Medium Chain Triglycerides | |

Mixes 1 and 2 are prepared independently, and then mixed together in a Z-blade mixer. To one of three such mixes is then added one of three encapsulated flavour products, mixing being continued until they are well incorporated. The three encapsulated flavour products are
- product of Example 1
- product of Example 2
- bovine gelatin bloom 250.

The three chewing gums thus produced are tested by submitting to a panel of five professional testers and judged on taste, long lastingness and flavour strength. The testers were looking for taste and flavour balance (to ascertain whether the two compositions of Examples 1 and 2 provided similar qualities to those of the established commercial gelatin-based product. The qualities sought are:
- taste and flavour (purely qualitative - quality of taste, presence of undesirable aftertastes);
- flavour intensity (how quickly (in seconds) the flavour became available on chewing)
- strength of flavour (how strong this flavour is, measured on a scale of from 1-8, with 8 representing the desired maximum standard).

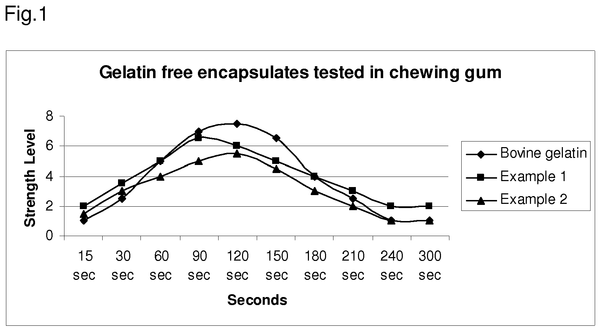

The results are shown in Figure 1. The following observations may be made:
1. The gum with the gelatin-based flavour was assessed to have the highest strength. However, the gums based on Examples 1 and 2 were only slightly inferior in this regard, this being perceptible only to trained testers.
2. The gums all released their flavour at very similar rates, all starting at about 15 seconds, rising to a maximum at 80-130 seconds and then falling back to the initial taste level at about 300 seconds.

The two pea protein-based gums are thus acceptable substitutes for the commercial gelatin-based product, and have the advantage of being gelatin-free.

## Claims

1. A method of making a gelatin-free encapsulated flavour, comprising the steps of
(i) emulsifying the flavour;
(ii) spraying the emulsified flavour on to a dry blend of hydrocolloid and unhydrolysed pea protein under conditions of high shear; and
(iii) continuing the shearing until the resulting particles have reached the desired size.

2. A gelatin-free encapsulated flavour, comprising flavour, hydrocolloid and unhydrolysed pea protein.

3. A gelatin-free encapsulated flavour according to claim 2, preparable by a method according to claim 1.

## Patentansprüche

1. Verfahren zum Herstellen eines gelatinefreien verkapselten Aromastoffs, umfassend die Schritte:
(i) Emulgieren des Aromastoffs;
(ii) Sprühen des emulgierten Aromastoffs auf ein trockenes Gemisch von Hydrokolloid und nichthydrolysiertem Erbsenprotein unter Bedingungen mit hoher Scherung; und
(iii) Fortsetzen des Scherens, bis die erhaltenen Partikel die gewünschte Größe erreicht haben.

2. Gelatinefreier verkapselter Aromastoff, umfassend Aromastoff, Hydrokolloid und nichthydrolysiertes Erbsenprotein.

3. Gelatinefreier verkapselter Aromastoff gemäß Anspruch 2, herstellbar durch ein Verfahren gemäß Anspruch 1.

## Revendications

1. Procédé de fabrication d'un arôme encapsulé sans gélatine, comprenant les étapes consistant à :
(i) émulsifier l'arôme ;
(ii) pulvériser l'arôme émulsifié sur un mélange sec d'hydrocolloïde et de protéine de pois non hydrolysée dans des conditions de fort cisaillement ; et
(iii)poursuivre le cisaillement jusqu'à ce que les particules résultantes aient atteint la taille souhaitée.

2. Arôme encapsulé sans gélatine, comprenant un arôme, un hydrocolloïde et une protéine de pois non hydrolysée.

3. Arôme encapsulé sans gélatine selon la revendication 2, pouvant être préparé par un procédé selon la revendication 1.
